# EUROPÄISCHE PATENTSCHRIFT

(11) **EP 1 608 895 B1**
(45) Veröffentlichungstag und Bekanntmachung des Hinweises auf die Patenterteilung: **08.11.2006**
(21) Anmeldenummer: 04724271.4
(22) Anmeldetag: 30.03.2004
(51) Int. Cl.: F16H 57/04

(54) **GETRIEBE-WÄRMETAUSCHER-EINHEIT**
DRIVE HEAT-EXCHANGER UNIT
UNITE ECHANGEUR DE CHALEUR-TRANSMISSION

(30) Priorität: 31.03.2003 DE 10314733
(43) Veröffentlichungstag der Anmeldung: 28.12.2005
(73) Patentinhaber: Voith Turbo GmbH & Co. KG, 89522 Heidenheim (DE)
(72) Erfinder: BUSCH, Jörg, 89551 Königsbronn-Zang (DE)
(74) Vertreter: Koch-Huld, Annegret Christa
(86) Internationale Anmeldenummer: PCT/EP2004/003354
(87) Internationale Veröffentlichungsnummer: WO 2004/088175

(56) Entgegenhaltungen:
- EP-A- 0 785 379
- EP-A- 0 812 746
- DE-A- 10 058 110
- DE-A- 19 625 357
- GB-A- 2 387 206
- PATENT ABSTRACTS OF JAPAN Bd. 2000, Nr. 15, 6. April 2001 (2001-04-06) & JP 2000 356261 A (SUZUKI MOTOR CORP), 26. Dezember 2000 (2000-12-26)

## Beschreibung

Die Erfindung betrifft eine Getriebe-Wärmetauscher-Einheit, im Einzelnen mit den Merkmalen aus dem Oberbegriff des Anspruchs 1.

Es ist bekannt, beim Einsatz von Getrieben, insbesondere Automatgetrieben in Antriebssträngen, diesen einen Wärmetauscher zuzuordnen, der ausgangsseitig angeordnet ist. Dabei erfolgt der Anschluss des Wärmetauschers an das Getriebe über Schlauch- und/oder Rohrleitungen. Diese sind hinsichtlich ihrer Auslegung an die Erfordernisse des entsprechenden Getriebes anzupassen und ferner entsprechend an das Getriebe beziehungsweise den Wärmetauscher anzuschließen. Bei unsachgemäßem Anschluss, besonderen Belastungen können Leckageverluste auftreten, die Verlust an Betriebsmittel und eine Umweltgefährdung zur Folge haben. Dies bedeutet, dass die Zeitintervalle zur Auffüllung mit neuem Betriebsmittel, das heißt einem Medium, was zum Betrieb des Getriebes erforderlich ist, beispielsweise in Form von Schmier- und/oder Steuermittel, relativ kurz sind. Ein weiterer wesentlicher Nachteil einer derartigen Kopplung zwischen Wärmetauscher und Getriebe besteht darin, dass die Leitungsführung bei der Auslegung des Getriebes hinsichtlich des benötigen Bauraumes mit zu berücksichtigen ist.

Zur Lösung dieser Problematik ist aus der gattungsgemäßen DE 196 25 357 A1 eine Ausführung mit in der Gehäusewand des Getriebes integrierten Kanälen für Betriebs- und/oder Kühlmittel bekannt, die sich bis an die Stirnseite des Getriebes erstrecken, wobei an dieser der Wärmetauscher angeordnet ist. Ein wesentlicher Nachteil der direkten Anordnung, insbesondere Anflanschung des Wärmetauschers am Ende des Getriebes besteht zum einen darin, daß die entsprechenden Anschlüsse zur Befestigung des Wärmetauschers und der Kopplung der Kanäle immer an die konkrete Wärmetauscherlösung anzupassen sind. Ferner sind diese entsprechend auszulegen oder Zusatzmaßnahmen zu treffen, um immer einen dichten Anschluss des Wärmetauschers zu gewährleisten.

Zuordnungen von Wärmetauschern zu Getriebebaueinheiten sind des weiteren aus den folgenden Druckschriften vorbekannt:
1. EP 0 812 746 A2
2. DE 196 25 357

Aus der Druckschrift EP 0 812 746 A2 ist eine Antriebsbaugruppe mit einem Retarder und einem Wärmetauscher vorbekannt. Dabei sind der Retarder, der Wärmetauscher, ein Adapter und gegebenenfalls ein Getriebe mechanisch unmittelbar zusammengefügt und durch die Kanäle des Adapters leitend miteinander verbunden. Der Retarder ist am Getriebe angeflanscht. Der Adapter führt mehrere Funktionen gleichzeitig aus: Zum einen verbindet er die genannten Bauteile auf mechanische Weise und des weiteren stellt er zwischen diesen mittels seiner Kanäle leitende Verbindungen her. Diese Lösung erlaubt ein rasches und unmittelbares Anschließen des Wärmetauschers an den Retarder unter völliger Vermeidung von Schläuchen. Der Adapter wird dabei in der Regel im hinteren Bereich des Getriebes angeordnet und dient der Kopplung zwischen dem Retarder und dem Wärmetauscher. Über den Wärmetauscher ist es ferner möglich, die Medien anderer Bauteile mit zu kühlen. Dies bedingt jedoch eine entsprechend aufwendige Leitungsführung, die insbesondere bei Zwischenschaltung eines Retarders entweder bereits im Vorfeld mit berücksichtigt werden muss oder aber um diesen herumgeführt wird.

Eine Ausführung eines im Getriebe integrierten Wärmetauschers DE 196 25 357 A1 vorbekannt. Die Anordnung des Wärmetauschers erfolgt als ein Bestandteil des Getriebegehäuses. Vorzugsweise ist der Wärmetauscher dabei direkt in das Getriebegehäuse integriert. Dies erfolgt dadurch, dass Kanäle für die Öl-/Wasser- oder Luftführung direkt ins Getriebegehäuse gegossen oder eingearbeitet sind. Gleiches gilt für die Zuführung des zu kühlenden Mediums zum Wärmetauscher und die Anschlussstücke für das Kühlmedium. Sind die Kanäle in das Gehäuse, insbesondere die Gehäusewand eingearbeitet, können sie derart vorgesehen sein, dass diese über eine Abdeckplatte von außen verschlossen sind. Ferner denkbar ist die Ausführung des Wärmetauschers als flache scheibenförmige Einheit, die praktisch formschlüssig an eine Getriebeseite angebaut wird, die in der Gehäusegestaltung entsprechend vorbereitet ist. Diese Lösung bietet insbesondere bei Anwendungen mit Retardern den Vorteil, dass bei dieser die Notwendigkeit entfällt, die Kühlwasserleitungen vom Motor am Getriebe vorbei nach hinten führen zu müssen, da der Anschluss bereits am vorderen Ende des Getriebes vorgesehen werden kann. Ein wesentlicher Nachteil dieser Ausführung besteht jedoch darin, dass insbesondere bei integrierten Kanälen kein separater Wärmetauscher vorgesehen ist, sondern die über die Zwischenwände zwischen den Kanälen erfolgenden Austauschmöglichkeiten die Funktion des Wärmetauschers zu übernehmen. Bei der dargestellten Ausführung erfolgt die Zufuhr des Kühlmittels an beliebiger Stelle am Getriebe. Bei Integration der Kanäle in der Gehäusewand ist es jedoch zur Gewährleistung einer optimalen Kühlwirkung erforderlich, entsprechend lange Leitungswege vorzusehen, die sich wiederum in einer entsprechenden Vorbereitung des Gehäuses niederschlagen oder aber in der Größe des Wärmetauschers. Ferner führt die vorgesehene Integration der Kanäle im Gehäuse zu einer sehr speziellen Ausführung. Der dafür erforderliche Bauraum wird immer verbraucht. Beim Einsatz in Bussen existieren für die dafür erforderlichen Bauräume jedoch nicht in allen Richtungen die notwendigen Freiräume.

Der Erfindung lag daher die Aufgabe zugrunde, eine Getriebe-Wärmetauscher-Einheit für den Einsatz in Antriebssträngen derart zu schaffen, dass die genannten Nachteile vermieden werden und insbesondere unnötige Leckageverluste ausgeschlossen sowie eine einfache und sichere Betriebsmittelführung über den Wärmetauscher gewährleistet wird. Ferner soll sich die erfindungsgemäße Lösung durch einen geringen konstruktiven und fertigungstechnischen Aufwand auszeichnen. Die Anzahl der erforderlichen Bauteile ist erheblich zu minimieren und eine Leckagedichte und gering beanspruchte Kopplung unterschiedlichster Wärmetauscher mit dem Getriebe zu gewährleisten.

Die erfindungsgemäße Lösung ist durch die Merkmale des Anspruchs 1 charakterisiert. Vorteilhafte Ausgestaltungen sind in den Unteransprüchen wiedergegeben.

Erfindungsgemäß wird bei der Getriebe-Wärmetauscher-Einheit der Wärmetauscher am Getriebe, vorzugsweise direkt ausgangsseitig angeordnet. Die Anbindung des Wärmetauschers erfolgt dabei über eine Halterung, wobei die Halterung am Getriebe, insbesondere der ausgangsseitigen Stirnseite des Gehäuses des Getriebes befestigt ist. Erfindungsgemäß sind die als Zu- und Abfuhrleitung zum Wärmetauscher fungierenden Verbindungsleitungen zwischen dem Getriebe und dem Wärmetauscher wenigstens teilweise in die Wandung der Halterung integriert, d.h. an dieser ausgeformt und bilden einen Teil der Wandung. Vorzugsweise können diese auch vollständig in der Wand der Halterung angeordnet sein, d.h. vollständig von der Halterung umschlossen. Dadurch werden die als Zu- und Abfuhrleitung zum und vom Wärmetauscher fungierenden Verbindungsleitungen zu Bestandteilen der Halterung. Die Leitungswege zwischen dem Ausgang aus dem Getriebe und Eingang zum Wärmetauscher können dadurch sehr kurz gehalten werden. Ferner wird der ohnehin für die Halterung verwendete Platz in optimaler Weise ausgenutzt, so dass kein zusätzlicher Bauraum bei der Auslegung der Getriebe-Wärmetauscher-Einheit zu berücksichtigen ist. Die Anschlüsse am Wärmetauscher werden nicht auf Biegung beansprucht wie bei direkt aufgeflanschten Lösungen.

Mit "intelligenten" Haltern lässt sich dabei einer Variabilität für eine Vielzahl von Anwendungsfällen erzielen, insbesondere der Änderungen von Wärmetauschern im Vergleich zu Haltern sehr aufwendig und damit mit hohen Kosten verbunden sind.

Die zueinander komplementären Anschlüsse am Getriebegehäuse und der Halterung für das zu führende Betriebsmittel und/oder der Befestigung sind vorzugsweise standardisiert ausgeführt. Dies ermöglicht es, ein hinsichtlich diese Kopplung für eine Vielzahl unterschiedlichster Wärmetauscher geeignetes Trägerelement zu schaffen. Das Tragelement wiederum weist vorzugsweise ebenfalls standardisierte Anschlüsse für den Wärmetauscher auf.

Die Halterung übernimmt dabei hauptsächlich die Trag- und Stützfunktion für den Wärmetauscher und ferner eine Adapterfunktion für den Anschluss unterschiedlicher Wärmetauscher. Vorzugsweise sind dazu die zueinander komplementär ausgeführten Anschlüsse zur Befestigung des Wärmetauschers an der ausgangsseitigen Stirnseite des Gehäuses angeordnet, wobei die Anordnung vorzugsweise in einer quer zur Rotationsachse ausgerichteten Ebene verstärktem Wandbereich des Gehäuses erfolgt. Diese Verstärkung erstreckt sich dabei über die gesamte axiale Erstreckung des Getriebegehäuses oder aber wenigstens dem Teil, in welchem die betriebsmittelführenden Kanäle angeordnet werden.

Mit dieser Anordnung bzw. Anbindung des Wärmetauschers über die Halterung wird ferner gewährleistet, dass beliebige Wärmetauscher mit dem Getriebe gekoppelt werden können, ohne dass deren Ausgestaltung auch noch auf die auf Biegung beanspruchte mechanische und medienführende Verbindung zum Gehäuse ausgelegt sein müssen. Dies kann nun an die Halterung verlagert werden, die je nach Getriebeausführung, insbesondere Gehäuseausführung für bestimmte Größen standardmäßig ausgeführt werden kann. Auf standardisierte bzw. herkömmliche Wärmetauscher kann somit zurückgegriffen werden. Die einzelnen Verbindungen zum Wärmetauscher von der Halterung sind dann entweder entsprechend passend, d. h. direkt überdeckend mit dem Wärmetauscher ausgeführt oder können bei Austausch des Wärmetauschers notfalls über kurze Leitungen im Bereich der Halterung realisiert werden. Vorzugsweise werden jedoch auch zwischen den Verbindungsleitungen in der Halterung und den Anschlüssen am Wärmetauscher standardisierte Verbindungen hinsichtlich Art, Dimensionierung und Anordnung an den einzelnen Elementen gewählt.

Der Anschluss für das Kühlmittel am Wärmetauscher ist direkt an der Halterung vorgesehen. Die zum Betrieb des Getriebes erforderlichen Medien werden vorzugsweise im Getriebe ebenfalls in im Gehäuse integrierten Kanälen geführt. Diese Führung ermöglicht den direkten Übergang zur Halterung des Wärmetauschers. Dabei sind die dafür vorgesehenen Anschlüsse am Gehäuse und der Halterung entsprechend komplementär anzuordnen, um eine sichere Überdeckung zu gewährleisten. Die Halterung wird dabei vorzugsweise über eine Abdichtung gegenüber dem Gehäuse in axialer Richtung verspannt und/oder über Steckrohre mit jeweils mindestens zwei radial dichtenden O-Ringen oder ähnlichem abgedichtet und axial verspannt.

Die Anbindung der Anschlüsse für das Kühlmittel an der Halterung bietet den Vorteil, dass bei einer Änderung der Anschlüsse die Befestigung des Wärmetauschers am Halter nicht geöffnet oder verändert werden muss.

Die betriebsmittelführenden Kanäle in der Gehäusewand erstrecken sich dabei über wenigstens einen Teil der axialen Erstreckung des Gehäuses durch die Gehäusewand in Richtung zur Ausgangsseite bei Leistungsübertragung vom Eingang zum Ausgang betrachtet des Getriebes.

Der Wärmetauscher kann als separates Bauteil ausgebildet sein oder aber mit dem Getriebedeckel zu einer funktionalen Einheit zusammengefasst werden, indem die Halterung beispielsweise über den Getriebedeckel am Gehäuse befestigt wird. In diesem Fall ist jedoch auch der Getriebedeckel mit den entsprechenden Kanälen zur Führung von Betriebsmedium ausgestattet.

Die erfindungsgemäße Lösung wird nachfolgend anhand einer Figur erläutert.

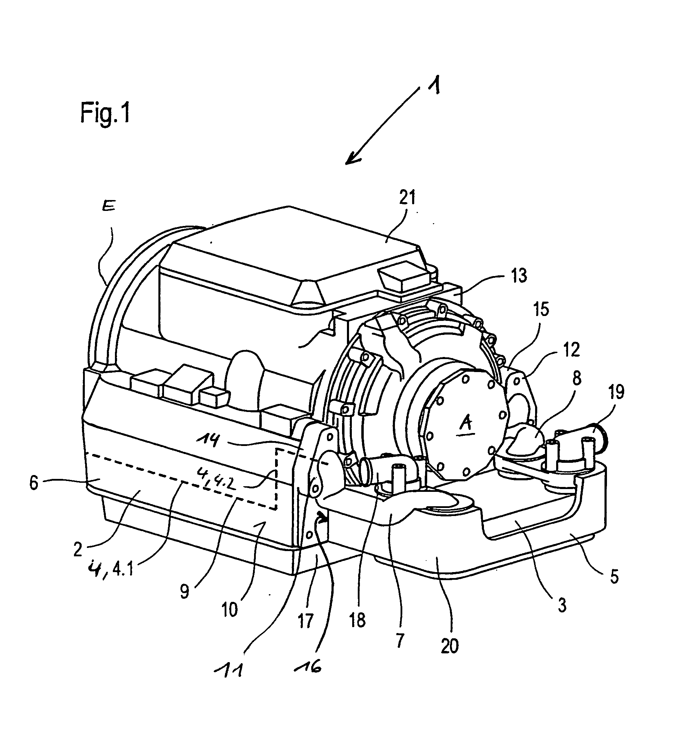

Die Figur 1 verdeutlicht in schematisch vereinfachter Darstellung anhand eines Perspektivansicht den Grundaufbau einer erfindungsgemäß gestalteten GetriebeWärmetauschereinheit 1. Diese umfasst ein Getriebe 2 mit einem, mit einer Antriebsmaschine koppelbaren Eingang E und mindestens einem Ausgang A. Ferner vorgesehen ist ein Wärmetauscher 3, der dem Getriebe 2 auf der Ausgangsseite, das heißt am Ausgang A zugeordnet ist und mit den betriebsmittelführenden Leitungen und/oder Kanälen 4 des Getriebes wenigstens mittelbar koppelbar ist. Der Wärmetauscher 3 ist dabei über eine Halterung 5 am Getriebe 2, insbesondere dessen Gehäuse 6, gelagert. Erfindungsgemäß sind die Verbindungsleitungen zwischen Wärmetauscher 3 und Getriebe 2 in der Halterung 5 integriert. Diese Verbindungsleitungen sind hier mit 7 und 8 bezeichnet. Dabei sind wenigstens jeweils zwei Verbindungsleitungen, im dargestellten Fall die Verbindungsleitung 7 und die Verbindungsleitung 8, vorgesehen, wobei je nach Funktionszuordnung eine der beiden Verbindungsleitungen als Zulaufleitung zum Wärmetauscher 3 fungiert, während die andere die Funktion der Ablaufleitung übernimmt. Im dargestellten Fall fungiert beispielhaft die Verbindungsleitung 7 als Zulaufleitung und die Verbindungsleitung 8 als Ablaufleitung. Beide Verbindungsleitungen sind mit entsprechenden Leitungen oder Kanälen 4 im Getriebe 2 verbunden. Dabei handelt es sich vorzugsweise um in der Wand 9 des Gehäuses 6 integrierte Leitungen beziehungsweise Kanäle, die der Führung von zum Betrieb der Getriebebaueinheit erforderlichen Medien dienen. Bei diesen handelt es sich in der Regel um das Getriebeöl, welches zum Zwecke der Schmierung oder aber zum Zwecke der Ansteuerung von Schaltelementen genutzt wird. Auch wird das Betriebsmittel zum Zwecke der Kühlung und für die Hydrodynamik, das heißt Leistungsübertragung im Wandler genutzt. Ferner denkbar versorgt das Betriebsmittel hydrodynamische Komponenten. Auch hier sind wenigstens zwei Leitungen 4.1 und 4.2 vorgesehen, wobei die eine mit der in der Halterung 5 angeordneten und als Zulaufleitung fungierenden Verbindungsleitung 7 koppelbar ist, während die andere mit der in der Halterung 5 angeordneten Verbindungsleitung 8 unter Bildung eines Kreislaufes 10 verbindbar ist. Die Kopplung erfolgt über entsprechende Anschlüsse 11 und 12 am Gehäuse 6. Dargestellt sind zwei betriebsmittelführende Leitungen beziehungsweise Kanäle 4.1 und 4.2 beziehungsweise Verbindungsleitungen 7 und 8, denkbar ist jedoch auch die Verwendung einer Mehrzahl derartiger Kanäle und Leitungen, die jedoch entsprechend zueinander komplementär beziehungsweise mit entsprechenden Anschluss am Gehäuse 6 des Getriebes 2 und der Halterung 5 ausgestattet sein müssen. Dabei sind dann die Anschlüsse 11 und 12 an der ausgangsseitigen Stirnseite 13 des Getriebes 2 mit Anschlüssen 14 und 15 an der dem Getriebe 2 zugewandten Stirnseite 16 verbindbar. Diese Art der Verbindung kann vielgestaltig ausgeführt sein. Entscheidend ist lediglich, dass die Anschlüsse 11 und 12 sowie 14 und 15 zueinander komplementär ausgeführt sind, so dass tatsächlich ein Kreislauf 10, der als offener oder geschlossener Kreislauf ausgeführt sein kann, erzeugt wird. Die realisierte Kopplung zwischen den einzelnen Anschlüssen 11 und 14 beziehungsweise 12 und 15 kann vielgestaltig ausgeführt sein. Diese kann form- und/oder kraftschlüssig erfolgen. Vorzugsweise wird jedoch die Halterung 5 in axialer Richtung gegenüber dem Gehäuse 6 unter Verwendung von zwischengeordneten Abdichtungen 17 verspannt. Häufig werden auch Steckrohre mit entsprechenden Dichtungen alleine oder sogar in Verbindung mit den beschriebenen Flachdichtungen verwendet. Die Halterung wird über die Befestigung am Gehäuse, die kraft- und/oder formschlüssig erfolgen kann, an diesem gelagert.

Ferner ist dem Wärmetauscher 3 ein hier im einzelnen nicht dargestellter Kühlkreislauf zugeordnet, der der Führung von Kühlmedium dient. Erkennbar sind dabei die Anschlüsse 18 und 19 für die als Zu- und Ablaufleitung fungierenden kühlmittelführenden Kanäle beziehungsweise Leitungen, die Bestandteil eines offenen oder geschlossenen Kreislaufes sein können. Mit dieser erfindungsgemäßen Lösung entfallen aufwendige Schlauch- oder Rohrleitungen zum Anschluss des Wärmetauschers 3 an das Getriebe 2. Die in die Halterung 5 integrierten Verbindungsleitungen 7 und 8 sind dabei vorzugsweise wenigstens teilweise in die Wand 20, vorzugsweise jedoch vollständig in diese integriert. Im dargestellten Fall sind jeweils nur zwei Verbindungsleitungen 7 und 8 vorgesehen. Denkbar ist jedoch auch entsprechend den Gegebenheiten eine Ausbildung mit mehreren, wobei diese dann separat betriebsmittelführende Kreisläufe bilden. Dies gilt in Analogie auch für die kühlmittelführenden Kanäle.

Die Anordnung der Halterung 5 am Gehäuse 6, insbesondere die Befestigung dieser, erfolgt dabei derart, dass der zum Abschluss des Gehäuses in axialer Richtung vorgesehene Gehäusedeckel 21 nicht einbezogen wird. Denkbar ist es jedoch auch, beispielsweise den Gehäusedeckel 21 als integralen Bestandteil der Halterung auszubilden.

Die Funktionsweise gestaltet sich analog zu der bekannter Anordnungen von Getrieben 2 mit Wärmetauschern 3. Durch die direkte Kopplung und die integrierten Leitungen in der Halterung 5 wird eine sehr kompakte GetriebeWärmetauschereinheit 1 geschaffen, welche frei neben dieser Einheit geführten Schlauch- und/oder Rohrleitungen ist. Die Anzahl der Einzelteile wird erheblich minimiert, da hier im einzelnen nur die Halterung mit integrierten Kanälen beziehungsweise Leitungen vorliegt. Die Anschlüsse an der Halterung, insbesondere an der Stirnseite 16, sind dabei derart angeordnet, dass diese komplementär zur Anordnung der Anschlüsse 11 und 12 am Gehäuse 6 erfolgen. Zur Realisierung standardisierter Wärmetauscher 3 sind die Anschlüsse 14 und 15 in einem Abstand zueinander quer zur theoretischen Verlängerung der Rotationsachse am Ausgang A angeordnet, wobei dieser Abstand ebenfalls am Gehäuse 6 vorgesehen ist. Der Wärmetauscher selbst kann beliebig ausgestaltet sein. Vorzugsweise ist dieser beispielsweise in Plattenbauweise ausgeführt. Andere Ausführungen sind denkbar.

### Bezugszeichenliste

- 1: Getriebewärmetauschereinheit
- 2: Getriebe
- 3: Wärmetauscher
- 4, 4.1, 4.2: betriebsmittelführende Kanäle
- 5: Halterung
- 6: Gehäuse
- 7: Verbindungsleitung
- 8: Verbindungsleitung
- 9: Wand des Gehäuses
- 10: Kreislauf
- 11: Anschluss
- 12: Anschluss
- 13: ausgangsseitige Stirnseite
- 14: Anschluss
- 15: Anschluss
- 16: Stirnseite
- 17: Abdichtung
- 18: Anschluss
- 19: Anschluss
- 20: Wand
- 21: Gehäusedeckel
- E: Eingang
- A: Ausgang

## Patentansprüche

1. Getriebe-Wärmetauscher-Einheit (1)
1.1 mit einem Getriebe (2), umfassend einen Eingang (E) und mindestens einen Ausgang (A);
1.2 mit einem Wärmetauscher (3), der dem Getriebe (2) an dessen Ausgangsseite zugeordnet ist und der wenigstens mittelbar über Verbindungsleitungen (7, 8) mit dem Getriebe (2) verbunden ist;
**gekennzeichnet durch** die folgenden Merkmale:
1.3 mit einem im Gehäuse (6) des Getriebes (2) integrierten betriebsmittelführenden Kanal oder Kanälen (4, 4.1, 4.2), die sich wenigstens über einen Teil der axialen Erstreckung des Gehäuses (6) bis zur ausgangsseitigen Stirnseite (13) des Getriebes (6) erstrecken;
1.4 mit einer Halterung (5) zur Befestigung des Wärmetauschers (3) an der ausgangsseitigen Stirnseite (13) des Gehäuses (6) des Getriebes (2);
1.5 die Verbindungsleitungen (7, 8) zur Kopplung zwischen dem oder den betriebsmittelführenden Kanälen im (4, 4.1, 4.2) Getriebe (2) und dem Wärmetauscher (3) sind in der Halterung (5) integriert;
1.6 mit hinsichtlich der Art und Dimensionierung standardisierten komplementären Anschlüssen (18, 19) an der Halterung (5) und dem Getriebegehäuse (6) zur Betriebsmittelführung und der Befestigung der Halterung (5).

2. Getriebe-Wärmetauscher-Einheit (1) nach Anspruch 1, **dadurch gekennzeichnet, dass** die Verbindungsleitungen (7, 8) wenigstens teilweise, vorzugsweise vollständig in der Wand (20) der Halterung (5) angeordnet sind.

3. Getriebe-Wärmetauscher-Einheit (1) nach einem der Ansprüche 1 oder 2, **dadurch gekennzeichnet, dass** wenigstens zwei Anschlüsse, ein erster Anschluss (18) und ein zweiter Anschluss (19) zur Verbindung von kühlmittelführenden Leitungen mit dem Wärmetauscher (3) vorgesehen sind.

4. Getriebe-Wärmetauscher-Einheit (1) nach Anspruch 3, **dadurch gekennzeichnet, dass** die Anschlüsse (18, 19) für Kühlmittel an der Halterung (5) angeordnet sind, wobei entsprechend der Funktionszuordnung der eine Anschluss (18) zur Kopplung mit einer Kühlmittelzufuhrleitung und der andere Anschluss (19) zur Kopplung mit einer Kühlmittelabfuhrleitung dient.

5. Getriebe-Wärmetauscher-Einheit (1) nach Anspruch 3, **dadurch gekennzeichnet, dass** der erste und/oder zweite Anschluss (18, 19) direkt am Wärmetauscher (3) angeordnet ist.

6. Getriebe-Wärmetauscher-Einheit (1) nach einem der Ansprüche 1 bis 5, **dadurch gekennzeichnet, dass** der Wärmetauscher (3) als separate Einheit ausgeführt ist.

7. Getriebe-Wärmetauscher-Einneit (1) nach einem der Ansprüche 1 bis 6, **dadurch gekennzeichnet, dass** der betriebsmittelführende kanal oder die betriebsmittelführenden Kanäle in der (4, 4.1, 4.2) Wand des Gehäuses (6) eingegossen oder eingearbeitet sind.

8. Getriebe-Wärmetauscher-Einheit (1) nach Anspruch 7, **dadurch gekennzeichnet, dass** der betriebsmittelführende kanal oder die betriebsmittelführenden Kanäle (4, 4.1, 4.2) einer Verstärkung der Wand des Gehäuses eingegossen oder eingearbeitet sind.

9. Getriebe-Wärmetauscher-Einheit (1) nach einem der Ansprüche 1 bis 8, **dadurch gekennzeichnet, dass** die Halterung (5) an der ausgangsseitigen Stirnwand des Gehäuses (6) im Bereich einer axialen Verstärkung dieser befestigt ist und die Verbindung frei von einer Befestigung an einem das Gehäuse (5) ist ausgangsseitig verschließenden Gehaüsedeckel (21) ist.

10. Getriebe-Wärmetauscher-Einheit (1) nach einem der Ansprüche 1 bis 9, **dadurch gekennzeichnet, dass** an der Halterung (5) hinsichtlich Art und Dimensionierung standardisiert ausgebildete Anschlüsse zur Kopplung mit komplementären Anschlüssen am Wärmetauscher (3) vorgesehen sind.

11. Getriebe-Wärmetauscher-Einheit (1) nach einem der Ansprüche 1 bis 8 oder 10, **dadurch gekennzeichnet, dass** die Halterung (5) mit dem Gehäusedeckel (21) eine integrale Einheit bildet.

12. Getriebe-Wärmetauscher-Einheit (1) nach einem der Ansprüche 1 bis 12, **dadurch gekennzeichnet, dass** der betriebsmittelführende kanal oder die betriebsmittelführenden Kanäle (4, 4.1, 4.2) beidseitig der theoretischen Verlängerung der den Ausgang (A) beschreibenden Achse in der Gehäusewandung (9) angeordnet sind, wobei auf der einen Seite die Zufuhrleitungen angeordnet sind und auf der andere die Abfuhrleitungen.

## Claims

1. A transmission and heat exchanger unit (1)
1.1 with a transmission (2) comprising an input (E) and at least one output (A);
1.2 with a heat exchanger (3) which is associated with the transmission (2) on its output side and is connected with the transmission (2) at least indirectly via connecting lines (7, 8);
**characterized by** the following features:
1.3 with a conduit or conduits (4, 4.1, 4.2) which is integrated in the housing (6) of the transmission (2), conducts operating medium and which extend at least over a part of the axial extension of the housing (6) up to the face side (13) of the transmission (6) on the output side;
1.4 with a mounting device (5) for fastening the heat exchanger (3) to the face side (13) of the housing (6) of the transmission (6) on the output side;
1.5 the connecting lines (7, 8) for coupling between the conduit(s) (4, 4.1, 4.2) in the transmission (2) conducting the operating medium and the heat exchanger (3) are integrated in the mounting device (5);
1.6 with connections (18, 19) on the mounting device (4) and the transmission housing (6) for conducting the operating medium and fastening the mounting device (5), which connections are standardized concerning the type and dimensioning.

2. A transmission and heat exchanger unit (1) according to claim 1,
**characterized in that** the connecting lines (7, 8) are arranged at least partly, and preferably completely in the wall (20) of the mounting device (5).

3. A transmission and heat exchanger unit (1) according to one of the claims 1 or 2, **characterized in that** at least two of the connections, a first connection (18) and a second connection (19), are provided for connecting coolant-conducting lines to the heat exchanger (3).

4. A transmission and heat exchanger unit (1) according to claim 3,
**characterized in that** the connections (18, 19) for the coolant are arranged on the mounting device (5), with the one connection (18), according to functional allocation, being provided for coupling with a coolant feed line and the other connection (19) for coupling with a coolant discharge line.

5. A transmission and heat exchanger unit (1) according to claim 3,
**characterized in that** the first and/or second connection (18, 19) is arranged directly on the heat exchanger (3).

6. A transmission and heat exchanger unit (1) according to one of the claims 1 to 5, **characterized in that** the heat exchanger (3) is arranged as a separate unit.

7. A transmission and heat exchanger unit (1) according to one of the claims 1 to 6, **characterized in that** the conduit or conduits (4, 4.1, 4.2) conducting the operating medium are cast into or incorporated in the wall of the housing (6).

8. A transmission and heat exchanger unit (1) according to claim 7,
**characterized in that** the conduit or conduits (4, 4.1, 4.2) conducting the operating medium are cast into or incorporated in a reinforcement of the wall of the housing (6).

9. A transmission and heat exchanger unit (1) according to one of the claims 1 to 8, **characterized in that** the mounting device (5) is fastened to the output-side face wall of the housing (6) in the region of an axial reinforcement of the same and the connection is free from a fastening to a housing cover (21) sealing the housing (5) on the output side.'

10. A transmission and heat exchanger unit (1) according to one of the claims 1 to 9, **characterized in that** connections designated for coupling with complementary connections on the heat exchanger (3) and arranged in a standardized manner with respect to type and dimensioning are provided on the mounting device (5).

11. A transmission and heat exchanger unit (1) according to one of the claims 1 to 8 or 10, **characterized in that** the mounting forms an integral unit with the housing cover (21).

12. A transmission and heat exchanger unit (1) according to one of the claims 1 to 12, **characterized in that** the conduit or conduits (4, 4.1, 4.2) conducting the operating medium are arranged in the housing wall (9) on both sides of the theoretical extension of the axis describing the output (A), with the feed lines being arranged on one side and the discharge lines on the other side.

## Revendications

1. Unité boîte de vitesses - échangeur de chaleur (1)
1.1 avec une boîte de vitesses (2) comprenant une entrée (E) et au moins une sortie (A) ;
1.2 avec un échangeur de chaleur (3) qui est associé à la boîte de vitesses (2) sur son côté sortie et qui est relié du moins indirectement à la boîte de vitesses (2) par l'intermédiaire de conduits de liaison (7, 8) ;
**caractérisée par** les particularités suivantes :
1.3 avec un canal ou des canaux (4, 4.1, 4.2) véhiculant un fluide de travail intégrés dans le carter (6) de la boîte de vitesses (2) et s'étendant sur au moins une partie de la dimension axiale du carter (6) jusqu'à la face d'extrémité (13) de la boîte de vitesses (6) située côté sortie ;
1.4 avec un support (5) destiné à fixer l'échangeur de chaleur (3) sur la face d'extrémité (13) du carter (6) de la boîte de vitesses (2) située côté sortie ;
1.5 les conduits de liaison (7, 8) destinés au raccordement entre le ou les canaux véhiculant le fluide de travail (4, 4.1, 4.2) dans la boîte de vitesses (2) et l'échangeur de chaleur (3) sont intégrés dans le support (5) ;
1.6 avec des raccords (18, 19) complémentaires de type et de dimensions standardisés montés sur le support (5) et le carter de boîte (6) pour véhiculer le fluide de travail et fixer le support (5).

2. Unité boîte de vitesses - échangeur de chaleur (1) selon la revendication 1, **caractérisée en ce que** les conduits de liaison (7, 8) sont disposés du moins partiellement, de préférence intégralement, dans la paroi (20) du support (5).

3. Unité boîte de vitesses - échangeur de chaleur (1) selon l'une quelconque des revendications 1 ou 2, **caractérisée en ce qu'**au moins deux raccords, un premier raccord (18) et un deuxième raccord (19), sont prévus pour relier à l'échangeur de chaleur (3) des conduits véhiculant un fluide de refroidissement.

4. Unité boîte de vitesses - échangeur de chaleur (1) selon la revendication 3, **caractérisé en ce que** les raccords (18, 19) pour le fluide de refroidissement sont disposés sur le support (5), l'un des raccords (18) servant au raccordement avec un conduit d'amenée de fluide de refroidissement et l'autre raccord (19), au raccordement avec un conduit d'évacuation du fluide de refroidissement suivant la fonction à laquelle ils sont associés.

5. Unité boîte de vitesses - échangeur de chaleur (1) selon la revendication 3, **caractérisé en ce que** le premier et/ou le deuxième raccord (18, 19) sont disposés directement sur l'échangeur de chaleur (3).

6. Unité boîte de vitesses - échangeur de chaleur (1) selon l'une quelconque des revendications 1 à 5, **caractérisée en ce** l'échangeur de chaleur (3) est réalisé sous forme d'unité distincte.

7. Unité boîte de vitesses - échangeur de chaleur (1) selon l'une quelconque des revendications 1 à 6, **caractérisée en ce que** le canal véhiculant le fluide de travail ou les canaux véhiculant le fluide de travail (4, 4.1, 4.2) sont coulés ou incorporés dans la paroi du carter (6).

8. Unité boîte de vitesses - échangeur de chaleur (1) selon la revendication 7, **caractérisé en ce que** le canal véhiculant le fluide de travail ou les canaux véhiculant le fluide de travail (4, 4.1, 4.2) sont coulés ou incorporés dans un renforcement de la paroi du carter.

9. Unité boîte de vitesses - échangeur de chaleur (1) selon l'une quelconque des revendications 1 à 8, **caractérisée en ce que** le support (5) est fixé sur la paroi d'extrémité du carter (6) située côté sortie, à la hauteur d'un renforcement axial de celle-ci, et que la liaison n'est pas fixée sur un couvercle (21) de carter fermant le carter (5) côté sortie.

10. Unité boîte de vitesses - échangeur de chaleur (1) selon l'une quelconque des revendications 1 à 9, **caractérisée en ce que** des raccords de type et de dimensions standardisés montés sur le support (5) et destinés au raccordement avec des raccords complémentaires prévus sur l'échangeur de chaleur (3) sont prévus.

11. Unité boîte de vitesses - échangeur de chaleur (1) selon l'une quelconque des revendications 1 à 8, **caractérisée en ce que** le support (5) et le couvercle (21) du carter forment une seule et même pièce.

12. Unité boîte de vitesses - échangeur de chaleur (1) selon l'une quelconque des revendications 1 à 11, **caractérisée en ce que** le canal véhiculant le fluide de travail ou les canaux véhiculant le fluide de travail (4, 4.1, 4.2) sont disposés de part et d'autre du prolongement théorique de l'axe décrivant la sortie (A) dans la paroi (9) du carter, les conduits d'amenée étant disposés d'un côté et les conduits d'évacuation, de l'autre côté.
